# EUROPEAN PATENT APPLICATION

(11) **EP 2 544 192 A2**
(43) Date of publication of application: **09.01.2013**
(21) Application number: 12175220.8
(22) Date of filing: 06.07.2012
(51) Int. Cl.: H01B 3/18, H01B 12/00

(54) **Covering material, superconducting electric wire and electrical device**

(30) Priority: 07.07.2011 JP 2011151057; 27.03.2012 JP 2012071832
(71) Applicant: Nitto Denko Corporation, Osaka 567-8680 (JP); Nitto Shinko Corporation, Sakai-shi, Fukui 910-0381 (JP)
(72) Inventor: Masaki, Shunsuke, Ibaraki-shi Osaka 567-8680 (JP); Nagai, Yozo, Ibaraki-shi Osaka 567-8680 (JP); Matsushita, Kiichiro, Ibaraki-shi, Osaka 567-8680 (JP); Furuta, Yoshihisa, Ibaraki-shi Osaka 567-8680 (JP); Hayashi, Kazunori, Sakai-shi Fukui 910-0381 (JP)
(74) Representative: Grünecker, Kinkeldey, Stockmair & Schwanhäusser

(57) **Abstract**

Provided is a covering material 10, characterized in that the covering material is a covering material for covering a superconducting wire, and a tensile modulus of elasticity at 25°C is 6.0 GPa or less. Further provided is also a superconducting electric wire 100, which includes the covering material 10 and a superconducting wire 110 covered with the covering material 10. Still further provided is an electrical device 200 produced by using the superconducting electric wire 100.

## Description

### BACKGROUND OF THE INVENTION

### Field of the Invention

The present invention relates to a covering material, a superconducting electric wire and an electrical device.

### Description of the Related Art

Rectangular electric wires prepared by covering rectangular wires with insulating covering materials have hitherto been used in coil devices to be used in electrical devices, such as rotary devices and magnets.

As such a type of insulating covering material, for example, there has been disclosed an adhesive tape prepared by laminating an adhesive layer on one side of a polyimide backing having a tensile modulus of elasticity or stretching at room temperature, equal to or larger than a predetermined value (see Patent Document 1). Such a covering material enables the suppression of breakage in the course of production and the maintenance of the adhesiveness.

### Prior Art Documents

### Patent Documents

Patent Document 1: Japanese Patent No. 4258895

Recently, superconducting wires have been usable at liquid nitrogen temperature, have allowed comparatively high critical current density to be obtained, and have been developed to such an extent enabling production of a lengthy superconducting wires. Accordingly, such superconducting wires are expected to be used in electrical devices.

### SUMMARY OF THE INVENTION

However, in a case where a superconducting electric wire is produced by spirally winding a covering material, as shown in the Patent Document 1, around a superconducting wire to cover the superconducting wire, the resulting superconducting electric wire is used to produce an electrical device and the produced electrical device is disposed under the condition of liquid nitrogen temperature, sometimes the insulation property of the superconducting electric wire is degraded. Such degradation of the insulation property may cause operation failure or the like in the electrical device. In particular, for example, in a case where the superconducting electric wire is bent in the case where the superconducting electric wire is used for producing an electrical device such as a coil, the insulation property of the superconducting electric wire tends to be much more degraded.

In view of such problems as described above, an object of the present invention is to provide a covering material capable of suppressing the degradation of the insulation property of a superconducting wire, which degradation is caused by disposing the superconducting wire in an ultralow temperature environment, and also provide a superconducting electric wire including such a covering material and an electrical device including such a covering material.

The present inventors paid attention to and made a diligent study on the properties of the superconducting wire and the covering material at an ultralow temperature such as liquid nitrogen temperature; consequently, the present inventors have perfected the present invention by discovering that the superconducting wire tends to contract in the liquid nitrogen temperature region, the covering material can not follow this contraction, hence a winding displacement occurs, and such a winding displacement significantly affects the degradation of the insulation property.

Specifically, according to the present invention, there is provided a covering material, in which the covering material is a covering material for covering a superconducting wire; and a tensile modulus of elasticity at 25°C is 6.0 GPa or less.

Such a tensile modulus of elasticity at 25°C falling within the aforementioned range enables the covering material to contract to a larger extent than the superconducting wire due to the environmental temperature change from the room temperature region to the liquid nitrogen temperature region. Consequently, the covering material can exhibit a winding compaction effect on the superconducting wire, and hence can prevent the winding displacement of the covering material. Accordingly, the degradation of the insulation property of the superconducting wire can be suppressed, which degradation is caused by disposing the superconducting wire in an ultralow temperature environment.

The covering material according to the present invention also preferably has a coefficient of linear expansion of 10 × 10⁻⁶/°C or more at 20°C to -150°C.

The covering material having a coefficient of linear expansion at 20°C to -150°C falling within the aforementioned range enables the covering material to contract to a larger extent in the liquid nitrogen temperature region, and hence can more exhibit the winding compaction effect on the superconducting wire.

The covering material preferably includes a backing and a viscoelastic layer formed on one surface of the backing, wherein the backing includes a polyimide resin.

Polyimide resin has heat resistance, and at the same time is a nonflammable material, and hence has excellent flame retardancy as an insulating material to be used for electric devices. Consequently, the backing including a polyimide resin enables the covering material to be imparted with flame retardancy. The viscoelastic layer included in the covering material enables the increase of the adhesiveness between the covering material and the superconducting wire and the adhesiveness of the covering material with itself in an arrangement where the superconducting wire is covered with the covering material, and hence the covering material can more exhibit the winding compaction effect on the superconducting wire.

In the covering material, the viscoelastic layer preferably includes a silicone-based viscoelastic composition.

The silicone-based viscoelastic composition is excellent in cold resistance, radiation resistance, heat resistance and corrosion resistance, and hence can improve the properties of the viscoelastic layer.

A superconducting electric wire of the present invention includes the covering material and the superconducting wire covered with the covering material.

The superconducting electric wire of the present invention includes the covering material having a tensile modulus of elasticity at 25°C falling within the aforementioned range, and hence, the degradation of the insulation property of the superconducting electric wire can be suppressed, which degradation is caused in a case where the superconducting electric wire is used in an electrical device and the electrical device is operated at liquid nitrogen temperature.

An electrical device of the present invention is produced by using the superconducting electric wire.

According to the electrical device of the present invention, because of being provided with the superconducting electric wire in which the degradation of the insulation property is suppressed, which degradation is caused in a case where the electrical device is operated at liquid nitrogen temperature, the operation failure or the like due to such degradation of the insulation property can be suppressed.

As described above, the present invention can provide a covering material capable of suppressing the degradation of the insulation property of a superconducting wire, which degradation is caused in a case where the superconducting wire is disposed in an ultralow temperature environment, and also provide a superconducting electric wire including the covering material and an electrical device including the covering material.

### BRIEF DESCRIPTION OF THE DRAWINGS

FIG. 1 is a schematic side view illustrating a covering material in a first embodiment of the present invention;
FIG. 2 is a schematic cross-sectional view illustrating the covering material in the first embodiment of the present invention, and is an enlarged cross-sectional view of the region II in FIG. 1;
FIG. 3 is a schematic oblique perspective view illustrating a superconducting electric wire in a second embodiment of the present invention;
FIG. 4 is a schematic plan view illustrating the superconducting electric wire in the second embodiment of the present invention;
FIG. 5 is a schematic cross-sectional view, along the V-V line in FIGS. 3 and 4, illustrating the superconducting electric wire in the second embodiment of the present invention; and
FIG. 6 is a schematic oblique perspective view illustrating a superconducting coil as an example of an electrical device in a third embodiment of the present invention.

### DETAILED DESCRIPTION OF THE PREFERRED EMBODIMENTS

Hereinafter, the embodiments of the present invention are described with reference to the accompanying drawings. Hereinafter, the same symbols are attached to the same or corresponding parts in the drawings, of which the descriptions are not repeated.

### First Embodiment

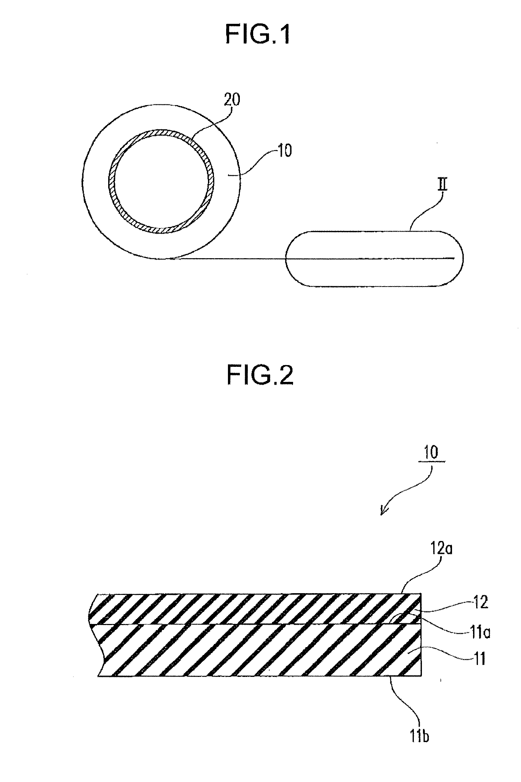

With reference to FIGS. 1 and 2, the covering material in a first embodiment of the present invention is described. As shown in FIGS. 1 and 2, the covering material 10 in the first embodiment of the present invention is a covering material for covering a superconducting wire.

As shown in FIG. 1, the covering material 10 in the present embodiment is of a tape shape, and is, for example, wound around a winding core 20 in a roll shape. The covering material 10 is not limited to a tape shape, but may also take any other shapes such as a sheet shape and a film shape.

As shown in FIG. 2, the covering material 10 includes a backing 11 having an upper surface 11a and a lower surface 11b opposite to the upper surface 11a, and a viscoelastic layer 12 formed on the upper surface 11a of the backing 11. Another layer may be further formed between the backing 11 and the viscoelastic layer 12. A release liner (not shown) for protecting the upper surface 12a may be formed on the upper surface 12a of the viscoelastic layer 12. Preferably, no viscoelastic layer 12 is formed on the lower surface 11b of the backing 11.

The backing 11 is not particularly limited as long as the backing 11 has an insulating property; however, the backing 11 preferably has radiation resistance and heat resistance. Examples of such a backing 11 include polyimide resin, polyether resin, polyether ether ketone resin, polyether imide resin and polyamide-imide resin. These resins may be used each alone or as mixtures of two or more thereof. Among these resins, in particular, polyimide resin is preferably used as the backing 11. Polyimide resin is a nonflammable material as well as a heat resistant material; hence, because of having an excellent flame retardancy as an insulating material used in an electrical device, polyimide resin has excellent properties as the backing 11 of the covering material 10 of the present embodiment.

Polyimide resin can be obtained by heretofore well known or conventional methods. For example, polyimide can be obtained by allowing an organic tetracarboxylic acid dianhydride and a diamino compound (diamine) to react with each other to synthesize a polyimide precursor (polyamide acid), and by dehydrating and ring-closing the polyimide precursor.

Examples of the organic tetracarboxylic acid dianhydride include: pyromellitic acid dianhydride , 3,3',4,4'-biphenyl tetracarboxylic acid dianhydride , 2,2-bis(2,3-dicarboxyphenyl)-1,1,1,3,3,3-hexafluoropropane dianhydride, 2,2-bis(3,4-dicarboxyphenyl)-1,1,1,3,3,3-hexafluoropropane dianhydride, 3,3',4,4'-benzophenone tetracarboxylic acid dianhydride, bis(3,4-dicarboxyphenyl)ether dianhydride and bis(3,4-dicarboxyphenyl)sulfone dianhydride. These organic tetracarboxylic acid dianhydrides may be used each alone or as mixtures of two or more thereof.

Examples of the diamino compound include m-phenylenediamine, p-phenylenediamine, 3,4-diaminodiphenyl ether, 4,4'-diaminodiphenyl ether, 4,4'-diaminodiphenyl sulfone, 3,3'-diaminodiphenyl sulfone, 2,2-bis(4-aminophenoxyphenyl)propane, 2,2-bis(4-aminophenoxyphenyl)hexafluoropropane, 1,3-bis(4-aminophenoxy)benzene, 1,4-bis(4-aminophenoxy)benzene, 2,4-diaminotoluene, 2,6-diaminotoluene, diaminodiphenylmethane, 2,2'-dimethyl-4,4'-diaminobiphenyl and 2,2'-bis(trifluoromethyl)-4,4'-diaminobiphenyl. These diamino compounds may be used each alone or as mixtures of two or more thereof.

As the diamino compound, compounds having an ether bond are preferable; specifically, it is preferable to use 4,4'-diaminodiphenyl ether (ODA). The inclusion of ODA improves the elongation of the covering material 10, and allows the covering material 10 to be designed as a soft film. The addition amount of ODA in the diamino compound component is preferably 10 mol% or more and 100 mol% or less and more preferably 50 mol% or more and 100 mol% or less.

For the polyimide resin used in the present embodiment, it is preferable to use pyromellitic acid dianhydride or 3,3',4,4'-biphenyl tetracarboxylic acid dianhydride as an organic tetracarboxylic acid dianhydride, and p-phenylenediamine or 4,4'-diaminodiphenyl ether as a diamino compound.

As such a polyimide resin, for example, the following commercially available products can also be used: Kapton (registered trademark) H (manufactured by Du Pont-Toray Co., Ltd.) and Kapton (registered trademark) EN (manufactured by Du Pont-Toray Co., Ltd.).

The backing 11 has a thickness of preferably 5 µm or more and 25 µm or less, more preferably 7 µm or more and 15 µm or less and furthermore preferably 7.5 µm or more and 12.5 µm or less. The thickness falling within this range allows a sufficient insulation property to be ensured, and when the superconducting wire is covered with such a covering material, the function of the superconducting wire can be sufficiently exhibited.
Specifically, when the thickness of the backing 11 is 25 µm or less, it is possible to increase the wire occupation rate of the superconducting wire in the superconducting electric wire formed when the superconducting wire is covered with the covering material, and hence it is possible to more suppress the degradation of the properties of the superconducting electric wire. When the thickness of the backing 11 is 15 µm or less, the degradation of the properties of the superconducting electric wire can be further suppressed. When the thickness of the backing 11 is 12.5 µm or less, the degradation of the properties of the superconducting electric wire can be furthermore suppressed.
When the thickness of the backing 11 is 5 µm or more, it is possible to increase the insulation property of the superconducting electric wire formed when the superconducting wire is covered with the covering material 10, and hence it is possible to suppress the occurrence of dielectric breakdown during operation. When the thickness of the backing 11 is 7 µm or more, it is possible to more suppress the occurrence of dielectric breakdown. When the thickness of the backing 11 is 7.5 µm or more, it is possible to furthermore suppress the occurrence of dielectric breakdown.

For the purpose of improving the anchoring capability of the backing 11 with the below described viscoelastic layer 12, the backing 11 in the present embodiment may be subjected to a chemical treatment such as a sputtering etching treatment, a corona treatment or a plasma treatment, or alternatively may be coated with a primer.

The backing 11 in the present embodiment may be formed of a layer or a plurality of layers.

The viscoelastic layer 12 includes a base polymer constituting a viscoelastic material. Such a base polymer is not particularly limited, and base polymers appropriately selected from heretofore known base polymers can be used as such a base polymer; examples of such a base polymer include acrylic-based polymers, rubber-based polymers, vinyl alkyl ether-based polymers, silicone-based polymers, polyester-based polymers, polyamide-based polymers, urethane-based polymers, fluorine-based polymers and epoxy-based polymers. These base polymers may be used each alone or as mixtures of two or more thereof. Among these base polymers, it is preferable to use a silicone-based polymer as the viscoelastic layer 12, from the viewpoint of being excellent in cold resistance, radiation resistance, heat resistance and corrosion resistance. In other words, the viscoelastic layer 12 preferably includes a silicone-based polymer-containing viscoelastic composition (silicone-based viscoelastic composition), and preferably the viscoelastic layer 12 is mainly composed of a silicone-based viscoelastic composition with the balance being composed of inevitable impurities.

The silicone-based viscoelastic composition includes a cross-linking structure of a mixture mainly composed of a silicone rubber and a silicone resin.

As the silicone rubber, for example, an organopolysiloxane including dimethylsiloxane as a main constitutional unit can be preferably used. A vinyl group or other functional groups may be introduced into the organopolysiloxane if necessary. The weight average molecular weight of the organopolysiloxane is usually 180,000 or more, and is preferably 280,000 or more and 1,000,000 or less and more preferably 500,000 or more and 900,000 or less. These silicone rubbers may be used each alone or as mixtures of two or more thereof. When the weight average molecular weight is low, the gel fraction can be adjusted by regulating the amount of a cross-linking agent.

It is possible to preferably use, as the silicone resin, for example, an organopolysiloxane made of a copolymer having at least one unit selected from the M unit (R₃SiO_{1/2}), the Q unit (SiO₂), the T unit (RSiO_{3/2}) and the D unit (R₂SiO) (in these units, R represents a monovalent hydrocarbon group or a hydroxyl group). The organopolysiloxane made of the copolymer may have one or more OH groups, and additionally, may also have various functional groups such as a vinyl group, as introduced therein, if necessary. The functional groups to be introduced may also be groups to cause cross-linking reactions. As the copolymer, the MQ resin composed of the M unit and the Q unit is preferable.

The mixing ratio (weight ratio) between the silicone rubber and the silicone resin is not particularly limited; however, the ratio silicone rubber:silicone resin is preferably approximately 100:0 to 20:80 and more preferably approximately 100:0 to 30:70. The silicone rubber and the silicone resin may also be simply mixed together or may also be used as a partial condensation product between the silicone rubber and the silicone resin.

The aforementioned mixture usually contains a cross-linking agent for the purpose of converting the mixture into a cross-linked structure. The gel fraction of the silicone-based viscoelastic composition can be regulated with a cross-linking agent.

The gel fraction of the viscoelastic layer 12 varies depending on the type of the silicone-based viscoelastic composition; the gel fraction of the viscoelastic layer 12 is generally preferably 20% or more and 99% or less and more preferably approximately 30% or more and 98% or less. The gel fraction falling within such a range offers an advantage that it is easy to establish the balance between adhesive force and retention force. Specifically, when the gel fraction is 99% or less, it is possible to suppress the occurrence of the decrease of the initial adhesive force and thus result in satisfactory sticking; when the gel fraction is 20% or more, a sufficient retention force is obtained, and hence the displacement of the covering material 10 can be suppressed.

The gel fraction (% by weight) of the silicone-based viscoelastic composition in the present embodiment is a value obtained as follows: a sample of a dry weight W₁ (g) is sampled from the silicone-based viscoelastic composition and immersed in toluene; then the insoluble matter of the sample is taken out from the toluene; then after drying the weight W₂ (g) of the insoluble matter is measured, and the gel fraction is derived from the formula (W₂/W₁) × 100.

The silicone-based viscoelastic composition in the present embodiment can use the following generally used cross-linkages: a peroxide curing type cross-linkage due to a peroxide-based cross-linking agent and an addition reaction type cross-linkage due to a Si-H group-containing siloxane-based cross-linking agent.

The cross-linking reaction of the peroxide-based cross-linking agent is a radical reaction, and accordingly the cross-linking reaction is allowed to proceed usually at a high temperature of 150°C or higher and 220°C or lower. On the other hand, the cross-linking reaction between a vinyl group-containing organopolysiloxane and a siloxane-based cross-linking agent is an addition reaction, and accordingly the reaction usually proceeds at a low temperature of 80°C or higher and 1.50°C or lower. In the present embodiment, the addition reaction-type cross-linkage is preferable particularly from the viewpoint that the cross-linking can be completed at a low temperature in a short period of time.

As the peroxide-based cross-linking agent, various cross-linking agents having hitherto been used for the silicone-based viscoelastic composition can be used without any particular limitation. Examples of such a peroxide-based cross-linking agent include benzoyl peroxide, t-butylperoxy benzoate, dicumyl peroxide, t-butyl cumyl peroxide, t-butyl peroxide, 2,5-dimethyl-2,5-di-t-butylperoxy hexane, 2,4-dichlorobenzoyl peroxide, di-t-butylperoxy-diisopropyl benzene, 1,1-bis(t-butylperoxy)-3,3,5-trimethylcyclohexane and 2,5-dimethyl-2,5-di-t-butylperoxy hexyne-3. These peroxide-based cross-linking agents may be used each alone or as mixtures of two or more thereof. Usually, the used amount of the peroxide-based cross-linking agent is preferably 0.15 part by weight or more and 2 parts by weight or less and more preferably 0.5 part by weight or more and 1.4 parts by weight or less in relation to 100 parts by weight of the silicone rubber.

As the siloxane-based cross-linking agent, for example, a polyorganohydrogen siloxane having in the molecule thereof at least on average two or more hydrogen atoms bonded to the silicon atom is used. Examples of the organic group bonded to the silicon atom include an alkyl group, a phenyl group and a halogenated alkyl group; however, from the viewpoint of the easiness in synthesis and handling, a methyl group is preferable. The skeletal structure of siloxane may be any of linear chain, branched chain and annular structures; preferable among these is a linear chain structure.

The siloxane-based cross-linking agent is mixed in an addition amount such that the number of the hydrogen atoms bonded to the silicon atoms is preferably one or more and 30 or less and more preferably four or more and 17 or less in relation to one vinyl group in the silicone rubber and the silicone resin. When the number of the hydrogen atoms bonded to the silicon atoms is one or more, a sufficient cohesive force is obtained; when the number of the hydrogen atoms bonded to the silicon atoms is four or more, a more sufficient cohesive force is obtained; when the number of the hydrogen atoms bonded to the silicon atoms is 30 or less, the degradation of the adhesion property can be suppressed; and when the number of the hydrogen atoms bonded to the silicon atoms is 17 or less, the degradation of the adhesion property can be more suppressed.
When the siloxane-based cross-linking agent is used, usually a platinum catalyst is used; however, various other catalysts can also be used.
When the siloxane-based cross-linking agent is used, a vinyl group-containing organopolysiloxane is used as the silicone rubber, and the content of the vinyl group is preferably approximately 0.0001 mol/100 g or more and 0.01 mol/100 g or less.

Within a range not impairing the advantageous effects of the present invention, for example, the following heretofore known various additives can be appropriately mixed in the viscoelastic layer of the present invention, in addition to the aforementioned base polymer: a tackifier, a plasticizer, a dispersant, an antiaging agent, an antioxidant, a processing aid, a stabilizer, an antifoaming agent, a flame retardant, a thickener, a pigment, a softener and a filler.

The viscoelastic layer 12 has a thickness of preferably 1 µm or more and 25 µm or less and more preferably 2 µm or more and 10 µm or less. The thickness of the viscoelastic layer 12 falling within this range offers an advantage that an appropriate adhesiveness can be obtained.
Specifically, when the thickness of the viscoelastic layer 12 is 25 µm or less, it is possible to increase the wire occupation rate of the superconducting wire in the superconducting electric wire formed when the superconducting wire is covered with the covering material 10, and hence it is possible to more suppress the degradation of the properties of the superconducting electric wire. When the thickness of the viscoelastic layer 12 is 10 µm or less, the degradation of the properties of the superconducting electric wire can be furthermore suppressed.
When the thickness of the viscoelastic layer 12 is 1 µm or more, the degree of adhesion of the viscoelastic layer 12 to the superconducting wire can be increased, and the space formed between the superconducting wire and the covering material 10 can be more suppressed. When the thickness of the viscoelastic layer 12 is 2 µm or more, the space formed between the superconducting wire and the covering material 10 can be furthermore suppressed.

In the covering material 10, the tensile modulus of elasticity at 25°C is 6.0 GPa or less and preferably 4.0 GPa or less. When the tensile modulus of elasticity at 25°C is 6.0 GPa or less, the covering material 10 can contract to a larger extent than the superconducting wire due to the environmental temperature change from the room temperature region to the liquid nitrogen temperature region. Consequently, the covering material 10 can exhibit the winding compaction effect on the superconducting wire, and hence the winding displacement can be prevented. Accordingly, when the superconducting wire is covered with the covering material 10, and the superconducting wire is disposed in an ultralow temperature environment, the degradation of the insulation property of the superconducting wire can be suppressed. When the tensile modulus of elasticity at 25°C is 4.0 GPa or less, the winding displacement for the superconducting wire can be more prevented.

The tensile modulus of elasticity of the covering material 10 at 25°C is preferably as small as possible; however, from the viewpoint of the precision of winding, the lower limit of the tensile modulus of elasticity at 25°C is, for example, 2.5 GPa.

The "tensile modulus of elasticity at 25°C" is measured by performing a tensile test in an atmosphere of 25°C according to ASTM-D882.

The "tensile modulus of elasticity at 25°C" can be adjusted by appropriately introducing -O- (ether bond) into the molecular structure constituting the backing according to the polymer design of the backing, the film formation conditions of the backing, the stretching conditions of the backing and the like.

In the aforementioned tensile modulus of elasticity, the temperature of 25°C is defined as the reference temperature. This is because: the superconducting wire is covered with the covering material and coils and the like are produced by using the covered superconducting wire generally at room temperature; accordingly, such a tensile modulus of elasticity that allows the winding compaction effect to be exhibited in the liquid nitrogen environment is intended to be specified on the basis of the value of the tensile modulus of elasticity at room temperature.

The covering material 10 preferably has a coefficient of linear expansion at 20°C to -150°C of 10 x 10⁻⁶/°C or more. The coefficient of linear expansion at 20°C to -150°C falling within a range of 10 × 10⁻⁶/°C or more allows the covering material to contract to a larger extent at liquid nitrogen temperature, which allows the covering material 10 to more exhibit the winding compaction effect thereof.

The foregoing phrase "the coefficient of linear expansion at 20°C to -150°C" means the coefficient of volumetric expansion obtained when a specimen of 5 mm in width and 25 mm in length of the covering material 10 is disposed in an atmosphere of 20°C to -150°C and the temperature of the covering material 10 is decreased by 1°C; a larger numerical value of such a coefficient of linear expansion means a larger contraction tending to be exhibited when the temperature is decreased. The foregoing "coefficient of linear expansion" means the coefficient of linear expansion of the covering material 10 in the same condition as the condition of being wound around the superconducting wire. In other words, when the covering material 10 is provided with the release liner, the foregoing coefficient of linear expansion means the coefficient of linear expansion of the covering material 10 in the condition that such a release liner is peeled off.

The aforementioned "coefficient of linear expansion at 20°C to -150°C" can be adjusted by appropriately introducing -O- (ether bond) into the molecular structure constituting the backing according to the polymer design of the backing, the film formation conditions of the backing, the stretching conditions of the backing and the like.

The covering material 10 has preferably a thickness of 7 µm or more and 40 µm or less, more preferably a thickness of 10 µm or more and 30 µm or less and furthermore preferably a thickness of 10 µm or more and 20 µm or less. When the thickness of the covering material 10 is 7 µm or more, the covering material 10 is sufficient in strength and excellent in handleability, and when the thickness of the covering material 10 is 10 µm or more, the covering material 10 is more sufficient in strength and more excellent in handleability. When the thickness of the covering material 10 is 40 µm or less, it is possible to increase the wire occupation rate of the superconducting wire in the superconducting electric wire formed when the superconducting wire is covered with the covering material 10, and hence it is possible to more suppress the degradation of the properties of the superconducting electric wire.

When the width and the winding angle of the superconducting wire are considered in the case where the covering material 10 is spirally wound with the winding angle of 20° or more and 80° or less and in a half-lap manner in which the covering material 10 partially overlaps with itself, the covering material 10 preferably has a width of one or more times and two or less times the width of the superconducting wire to be covered. The width of such a covering material 10 is, for example, preferably 1 mm or more and 80 mm or less and more preferably 1.5 mm or more and 60 mm or less.

The covering material 10 is preferably a lengthy product because the covering of the superconducting wire with the covering material 10 is preferably free from the patching together portion corresponding to the connection portion in the covering of the superconducting wire. The length of such a covering material 10 is, for example, preferably 500 mm or more, more preferably 1000 mm or more and furthermore preferably 3000 mm or more. The covering material 10 of the present embodiment is wound in a roll shape around the winding core 20 to be retained; however, the covering material 10 of the present embodiment may also be retained as wound around a winding core 20 in a plurality of rows, namely, in so-called bobbin winding.

Next, with reference to FIGS. 1 and 2, the production method of the covering material 10 in the present embodiment is described.

First, as described above, the backing 11 having the upper surface 11a and the lower surface 11b opposite to the upper surface 11a is prepared.

Next, the viscoelastic layer 12 is formed on the upper surface 11a of the backing 11. The formation method of the viscoelastic layer 12 is not particularly limited; for example, the viscoelastic layer 12 can be formed by a method of coating the upper surface 11a of the backing 11 with a silicone-based viscoelastic composition.

Specifically, a solution prepared by dissolving, in a solvent such as toluene, the silicone-based viscoelastic composition including a silicone rubber, a silicone resin, a cross-linking agent, a catalyst and the like is applied to the upper surface 11a of the backing 11, and next, by heating the aforementioned mixture, the solvent is distilled off and cross-linking is performed. Examples of the formation method of the viscoelastic layer 12 including the silicone-based viscoelastic composition in the present embodiment include: an extrusion coating method based on roll coating, kiss-roll coating, gravure coating, reverse coating, roll brush coating, spray coating, dip roll coating, bar coating, knife coating, air-knife coating, curtain coating, lip coating or die coating.

By performing the foregoing steps, the covering material 10 shown in FIG. 2 can be produced. The production method of the covering material 10 is not particularly limited to the above-described method. When the covering material 10 is provided with a release liner, the covering material 10 may be produced, for example, by the following method.

Specifically, first, a release liner is prepared. Examples of the release liner include: paper; films of synthetic resins such as polyethylene, polypropylene and polyethylene terephthalate; and rubber sheet, paper, cloth, non-woven fabric, net, foam sheet and metal foil or laminate sheets of these.

Next, on the release liner, for example, the viscoelastic layer 12 including the silicone-based viscoelastic composition is formed. The formation method of the viscoelastic layer 12 is not particularly limited; however, when the addition reaction type cross-linking is performed by heating, using toluene as the solvent, the heating temperature is, for example, preferably 80°C or higher and 150°C or lower and more preferably 100°C or higher and 130°C or lower. The heating temperature is not particularly limited as long as the heating temperature allows the solvent to be distilled off and allows the intended cross-linking reaction to proceed.

Next, the viscoelastic layer 12 formed on the release liner is transferred onto the backing 11. By performing the foregoing steps, the covering material 10 shown in FIG. 2 can be produced.

In the present embodiment, as shown in FIG. 1, a step of winding, around the winding core 20, the covering material 10 shown in FIG. 2 is further performed. This step may be omitted depending on the factors such as the shape of the covering material 10.

As described above, the covering material 10 in the present embodiment is a covering material for covering a superconducting wire, and a tensile modulus of elasticity thereof at 25°C is 6.0 GPa or less.

According to the covering material 10 in the present embodiment, the tensile modulus of elasticity of the backing 11 at 25°C falls within the aforementioned range, and hence the covering material 10 can contract to a larger extent than the superconducting wire, due to the environmental temperature variation from the room temperature region to the liquid nitrogen temperature region. Consequently, the covering material 10 can exhibit the winding compaction effect on the superconducting wire, and hence the winding displacement can be prevented. Accordingly, when the superconducting wire is disposed in an ultralow temperature environment, the degradation of the insulation property of the superconducting wire can be suppressed.

### Second Embodiment

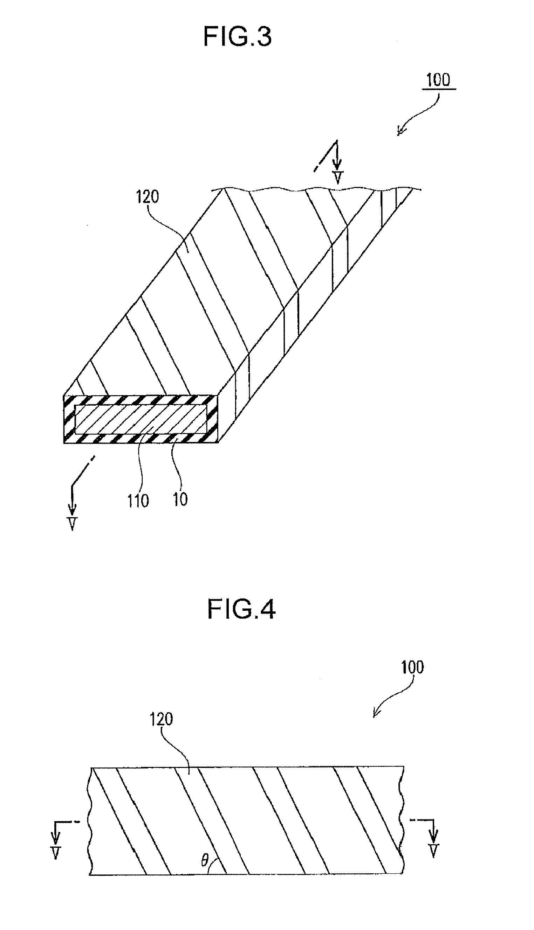

With reference to FIGS. 3 to 5, the superconducting electric wire 100 in the second embodiment according to the present invention is described. As shown in FIG. 3, the superconducting electric wire 100 in the present embodiment includes the covering material 10 of the first embodiment and a superconducting wire 110 covered with this covering material 10.

The mode of the covering of the superconducting wire 110 with the covering material 10 is not particularly limited; the covering material 10 may be spirally wound, or may be wound in such a way that the superconducting wire 110 runs along the lengthwise direction of the covering material 10 (so as to be attached in the longitudinal direction). As shown in FIGS. 3 to 5, the superconducting wire 110 in the present embodiment is covered with the covering material 10 in such a way that the covering material 10 is spirally wound around the superconducting wire 110.

A preferable mode in the case where the covering material 10 is spirally wound around the superconducting wire 110 is described with reference to FIGS. 3 to 5.

As shown in FIG. 4, the angle θ (also referred to as the winding angle θ or the winding-around angle θ) between the extension direction of the superconducting wire 110 and the winding direction of the covering material 10 is, for example, 20° or more and 80° or less.

The superconducting wire 110 is a tape-shaped wire, and each of the edges thereof may be angular or curved (rounded). As the superconducting wire 110, various superconducting wires such as a bismuth-based, an yttrium-based and a niobium-based superconducting wire can be appropriately used.

An example of a specific dimension of the superconducting wire 110 is such that the thickness is 1 mm or more and 10 mm or less, the width is 1 mm or more and 20 mm or less, and the aspect ratio (the ratio width/thickness in the cross-sectional shape) is approximately 1 or more and 60 or less.

Next, the production method of the superconducting electric wire 100 in the present embodiment is described.

First, according to the first embodiment, the covering material 10 is produced.

Next, the superconducting wire 110 is prepared, and as shown in FIGS. 3 to 5, the covering material 10 is spirally wound around the superconducting wire 110 in such a way that the covering material 10 partially overlaps with itself in a half lap manner. When the covering material 10 is not provided with the viscoelastic layer 12, the covering material 10 is disposed in such a way that an area of the upper surface 11a (the lower surface 11b) of the backing 11 of the covering material 10 is brought into contact with the superconducting wire 110, and the rest area of the upper surface 11a (the lower surface 11b) of the backing 11 of the covering material 10 is brought into contact with an area of the lower surface 11b (the upper surface 11a) of the backing 11 of the covering material 10 held in contact with the superconducting wire 110 at the upper surface 11a thereof. When the covering material 10 is provided with the viscoelastic layer 12, the covering material 10 is disposed in such a way that an area of the viscoelastic layer 12 is brought into contact with the superconducting wire 110, and the rest area of the viscoelastic layer 12 is brought into contact with an area of the lower surface 11b of the backing 11 of the covering material 10 held in contact with the superconducting wire 110.

In the case where the covering material 10 is provided with a release liner, when the covering material 10 is wound around the superconducting wire 110, the covering material 10 is wound around the superconducting wire 110 while the release liner and the upper surface 12a of the viscoelastic layer 12 are being released from each other.

By performing the foregoing steps, the superconducting electric wire 100 of the present embodiment shown in FIGS. 3 to 5 can be produced.

As described above, the superconducting electric wire 100 in the present embodiment includes the covering material 10 in the first embodiment and the superconducting wire 110 covered with the covering material 10.

The superconducting electric wire 100 in the present embodiment includes the covering material 10 in which the tensile modulus of elasticity at 25°C falls within the aforementioned range, and hence when the superconducting electric wire 100 obtained by covering the superconducting wire 110 with the covering material 10 is used in an electrical device and the electrical device is operated at liquid nitrogen temperature, the degradation of the insulation property of the superconducting electric wire 100 can be suppressed.

### Third Embodiment

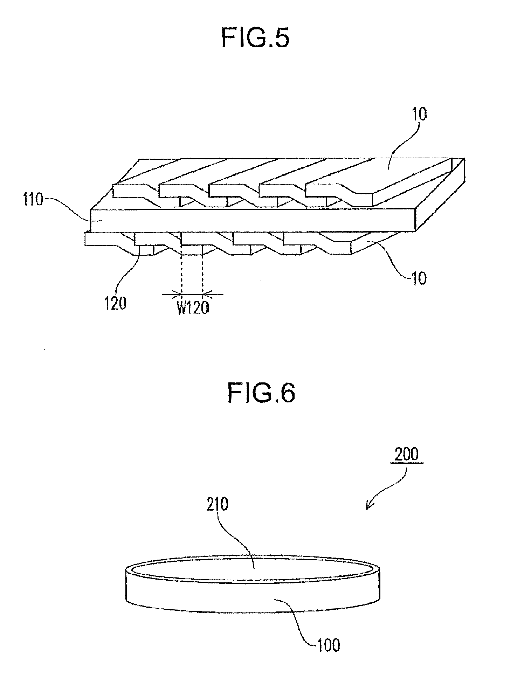

With reference to FIG. 6, description is made on a coil 200 as an example of the electrical device of the third embodiment of the present invention. As shown in FIG. 6, the coil 200 of the present embodiment includes a reel 210 and the superconducting electric wire 100 of the second embodiment wound around the reel 210.

The reel 210 is not particularly limited as long as the superconducting electric wire 100 can be wound around the reel 210; however, examples of the reel 210 include a cylindrical type and a racetrack type. The superconducting electric wire 100 may be a string, or may be formed of a plurality of strings connected to each other according to the required length. The coil may be formed of a plurality of laminated coils 200.

The production method of the coil 200 in the third embodiment includes a step of preparing the reel 210, and a step of winding the superconducting electric wire 100 around the reel 210.

In the present embodiment, the coil 200 is described as an example of the electrical device; however, the electrical device of the present invention is not limited to the coil 200, and for example, may also be a superconducting magnet, a superconducting cable or an electric power storage apparatus.

As described above, the coil 200 as an example of the electrical device of the present embodiment is produced by using the superconducting electric wire 100 of the second embodiment.

According to the coil 200 as an example of the electrical device of the present invention, the coil 200 includes the superconducting electric wire in which the degradation of the insulation property thereof is suppressed when the coil 200 is operated at liquid nitrogen temperature; and hence it is possible to suppress the operation failure or the like due to such degradation of the insulation property.

### Examples

### Example 1

The same covering material as in the first embodiment was produced. Specifically, 70 parts by weight of "X-40-3229 (a silicone rubber, solid content: 60%, manufactured by Shin-Etsu Chemical Co., Ltd.) and 30 parts by weight of "KR-3700" (a silicone resin, solid content: 60%, manufactured by Shin-Etsu Chemical Co., Ltd.) as a silicone-based viscoelastic material, 0.5 part by weight of a platinum catalyst "PL-50T" (manufactured by Shin-Etsu Chemical Co., Ltd.) and 315 parts by weight of toluene as a solvent were mixed together, and the resulting mixture was stirred with a disper to prepare a mixed solution containing a silicone-based viscoelastic composition. As the backing, a polyimide resin film "Kapton(registered trademark) 50H" (thickness: 12.5 µm, manufactured by Du Pont-Toray Co., Ltd.) was used. Then, the mixed solution was applied with a fountain roll onto the backing in such a way that the thickness of the silicone-based viscoelastic composition after drying was 3 µm, and cured and dried under the conditions of a drying temperature of 150°C and a drying time of 1 minute, to prepare a covering material 10 in which a viscoelastic layer 12 having a gel fraction of 74% was formed on the backing 11. The obtained covering material 10 was taken up onto a winding core 20 (inner diameter: 76 mm) to yield a roll-shaped wound body as shown in FIG. 1.

### Example 2

The covering material of Example 2 was produced in the same manner as in Example 1 except that a polyimide resin film "Kapton(registered trademark) 50EN" (thickness: 12.5 µm, manufactured by Du Pont-Toray Co., Ltd.) was used as the backing.

### Example 3

The covering material of Example 3 was produced in the same manner as in Example 1 except that a polyimide resin film "Kapton(registered trademark) 40EN" (thickness: 10 µm, manufactured by Du Pont-Toray Co., Ltd.) was used as the backing.

### Example 4

The covering material of Example 4 was produced in the same manner as in Example 1 except that a polyimide resin film "Kapton(registered trademark) 30EN" (thickness: 7.5 µm, manufactured by Du Pont-Toray Co., Ltd.) was used as the backing.

### Example 5

The covering material of Example 5 was produced in the same manner as in Example 1 except that a polyimide resin film "Kapton(registered trademark) 100H" (thickness: 25 µm, manufactured by Du Pont-Toray Co., Ltd.) was used as the backing.

### Example 6

The covering material of Example 6 was produced in the same manner as in Example 1 except that a polyimide resin film "Kapton(registered trademark) 100EN" (thickness: 25 µm, manufactured by Du Pont-Toray Co., Ltd.) was used as the backing.

### Example 7

The covering material of Example 7 was produced in the same manner as in Example 1 except that a polyimide resin film "Upilex(registered trademark)-25R" (thickness: 25 µm, manufactured by Ube Industries, Ltd.) was used as the backing.

### Comparative Example 1

The covering material of Comparative Example 1 was produced in the same manner as in Example 1 except that a polyimide resin film "Upilex(registered trademark)-12.5S" (thickness: 12.5 µm, manufactured by Ube Industries, Ltd.) was used as the backing.

### Comparative Example 2

The covering material of Comparative Example 2 was produced in the same manner as in Example 1 except that a polyimide resin film "Upilex(registered trademark)-25S" (thickness: 25 µm, manufactured by Ube Industries, Ltd.) was used as the backing.

### (Evaluation Methods)

For each of Examples 1 to 7 and Comparative Examples 1 and 2, the tensile modulus of elasticity and the coefficient of linear expansion were measured respectively as follows, and the winding displacement was also evaluated as follows. The results thus obtained are shown in Table 1.

### (Tensile Modulus of Elasticity)

The tensile modulus of elasticity of the backing used in each of Examples 1 to 7 and Comparative Examples 1 and 2 was measured in an atmosphere of 25°C according to ASTM-D882.

### (Coefficient of Linear Expansion)

An evaluation sample of 25 mm × 4 mm was prepared by punching out from each of the covering materials produced in Examples 1 to 7 and Comparative Examples 1 and 2. These evaluation samples were measured with a thermomechanical analyzer TMA 4000A (manufactured by Bruker AXS Corp.) by a tensile method under the conditions that the measurement load was 3 g, the temperature increase rate was 5°C/min and the temperature decrease process ranged from 20 to -150°C; thus, the coefficient of linear expansion of each of the evaluation samples was derived.

### (Evaluation of Winding Displacement at Room Temperature)

A specimen of 5 mm in width was prepared from each of the covering materials produced in Examples 1 to 7 and Comparative Examples 1 and 2, and was wound in a spirally covering manner around a superconducting wire, "Di-BSCCO" (wire: bismuth-based superconducting wire, 0.23 mm in thickness × 4.3 mm in width, manufactured by Sumitomo Electric Industries, Ltd.) at a winding angle (the angle θ in FIG. 4) of 60 degrees with the overlap (the width W120 of the lap portion 120 in FIG. 5) of the covering material with itself of approximately 2.0 mm to prepare an evaluation sample of 10 cm in length.
The evaluation sample was wound around a mandrel of 30 mm in outer diameter and was allowed to stand at room temperature for 1 hour. Then, the periphery of the evaluation sample wound around the mandrel was visually observed to examine the occurrence/non-occurrence of the winding displacement of the covering material. The case where no winding displacement was found was marked with "○" and the case where the winding displacement was found was marked with "x." The results thus obtained are shown in Table 1.

### (Evaluation of Winding Displacement after Immersion in Liquid Nitrogen)

The evaluation samples of the covering materials produced in Examples 1 to 7 and Comparative Examples 1 and 2 were prepared in the same manner as in the foregoing case of the evaluation of the winding displacement at room temperature; each of the evaluation samples was wound around a mandrel, and then immersed in liquid nitrogen for 1 hour. Then, the periphery of the evaluation sample wound around the mandrel was visually observed to examine the occurrence/non-occurrence of the winding displacement of the covering material in the same manner as in the foregoing evaluation of the winding displacement at room temperature. The results thus obtained are shown in Table 1.

**[Table 1]**

| | Exam. 1 | Exam. 2 | Exam. 3 | Exam. 4 | Exam. 5 | Exam. 6 | Exam. 7 | C. Exam. 1 | C. Exam. 2 |
|---|---|---|---|---|---|---|---|---|---|
| Type of backing | Kapton 50H | Kapton 50EN | Kapton 40EN | Kapton 30EN | Kapton 100H | Kapton 100EN | Upilex⁻25R | Upilex⁻12.5S | Upilex⁻25S |
| Thickness of backing [µm] | 12.5 | 12.5 | 10 | 7.5 | 25 | 25 | 25 | 12.5 | 25 |
| Tensile modulus of elasticity of backing (GPa) | 3 5 | 5.8 | 5.5 | 5.6 | 3 4 | 5.8 | 3.9 | 11 | 9.1 |
| Coefficient of linear expansion (× 10⁻⁶/°C) | 20.0 | 12 1 | 13.6 | 15.1 | 19.0 | 13 6 | 32.1 | 8.7 | 8.4 |
| Winding displacement at room temperature | ○ | ○ | ○ | ○ | ○ | ○ | ○ | × | ○ |
| Winding displacement after immersion in liquid nitrogen | ○ | ○ | ○ | ○ | ○ | ○ | ○ | × | × |

As shown in Table 1, no winding displacement occurred when the covering materials of Examples 1 to 7 in which the tensile modulus of elasticity at 25°C of the backing was 6.0 GPa or less were wound around a superconducting wire at room temperature and then allowed to stand at room temperature. Alternatively, when such covering materials of Examples 1 to 7 were wound around a superconducting wire at room temperature and then immersed in liquid nitrogen to be exposed to an ultralow temperature environment, even such exposure to an ultralow temperature environment causes no winding displacement. Consequently, it has been found that the production of a superconducting electric wire by covering a superconducting wire with each of the covering materials of Examples 1 to 7 enables the suppression of the degradation of the insulation property of the superconducting wire.
On the contrary, in Comparative Example 1 in which the tensile modulus of elasticity at 25°C of the backing did not satisfy the aforementioned range, a winding displacement occurred when allowed to stand at room temperature, and a winding displacement also occurred when exposed to an ultralow temperature environment. In Comparative Example 2 in which the aforementioned tensile modulus of elasticity did not satisfy the aforementioned range as in Comparative Example 1, a winding displacement occurred when exposed to an ultralow temperature environment.

As described above, Embodiments and Examples of the present invention have been described. Appropriate combinations of the features of the individual Embodiments and individual Examples are also anticipated from the very beginning. Embodiments and Examples disclosed this time are presented for the purpose of exemplification, and should be construed as non-limiting. The scope of the present invention is defined by the appended claims rather than foregoing Embodiments and Examples, and all the modifications in the meanings and the scope equivalent to the claims are intended to be included.

## Claims

1. A covering material (10), **characterized in that** the covering material is a covering material for covering a superconducting wire; and
a tensile modulus of elasticity thereof at 25°C is 6.0 GPa or less.

2. The covering material (10) according to claim 1, wherein a coefficient of linear expansion thereof at 20°C to -150°0 is 10 × 10⁻⁶/°C or more.

3. The covering material (10) according to claim 1 or 2, comprising a backing and a viscoelastic layer (12) formed on a surface of the backing, wherein the backing contains a polyimide resin.

4. The covering material (10) according to claim 3, wherein the viscoelastic layer (12) contains a silicone-based viscoelastic composition.

5. A superconducting electric wire (100), **characterized in that** the superconducting electric wire (100) comprises:
the covering material (10) according to any one of claims 1 to 4; and
a superconducting wire (110) covered with the covering material (10).

6. An electrical device (200), **characterized in that** the electrical device (200) is produced by using the superconducting electric wire (100) according to claim 5.
